# EUROPÄISCHE PATENTSCHRIFT

(11) **EP 1 230 106 B1**
(45) Veröffentlichungstag und Bekanntmachung des Hinweises auf die Patenterteilung: **28.01.2004**
(21) Anmeldenummer: 00983025.8
(22) Anmeldetag: 17.10.2000
(51) Int. Cl.: B60R 16/02

(54) **ASSISTENZVORRICHTUNG FÜR EIN FAHRZEUG**
AUTOMOTIVE ASSISTANCE DEVICE FOR A VEHICLE
DISPOSITIF D'ASSISTANCE POUR UN VEHICULE

(30) Priorität: 03.11.1999 DE 19952854
(43) Veröffentlichungstag der Anmeldung: 14.08.2002
(73) Patentinhaber: ROBERT BOSCH GMBH, 70442 Stuttgart (DE)
(72) Erfinder: ENGELSBERG, Andreas, 31141 Hildesheim (DE); BAUER, Sven, 31134 Hildesheim (DE); SCHMALE, Bernd, 31139 Hildesheim (DE); KUSSMAN, Holger, 31180 Giesen (DE)
(86) Internationale Anmeldenummer: PCT/DE2000/003643
(87) Internationale Veröffentlichungsnummer: WO 2001/032472

(56) Entgegenhaltungen:
- EP-A- 0 870 654
- EP-A- 0 893 308
- EP-A- 1 083 096
- DE-A- 3 817 495
- DE-A- 19 631 414
- DE-A- 19 728 226

## Beschreibung

### Stand der Technik

Die Erfindung geht aus von einer Assistenzvorrichtung für ein Fahrzeug nach der Gattung des unabhängigen Patentanspruchs.

Es ist bereits aus der Patentschrift DE 44 14 216 C1 bekannt, daß an einem Fahrzeug ein Objekterkennungssystem angebracht ist, das anhand des Gesichts einer Person erkennt, ob diese Person eine für das Fahrzeug berechtigte Person ist. Dafür werden aus einem Speicher Daten geladen, um diese Daten mit dem Gesicht der Person zu vergleichen, so daß festgestellt wird, ob diese Person als berechtigt erkannt wird. Diese Vorrichtung wird benutzt, um die Freigabe eines Fahrzeugs für eine Person festzustellen und zu ermöglichen.

In der gattungsbildenden DE 197 28 226 A1 werden Einstellungen in einem Fahrzeug offenbart, die gemäß eines Benutzerprofils vorgenommen werden. Die Einstellungen betreffen eine Klimaanlage, Motor, Getriebe, Sitz und Wegfahrsperre. Die Person wird durch Eingaben oder biometrische Messverfahren erkannt. In EP-A2-89308 wird ein Gerät, das einen Avatar zur Kommunikation in einem Fahrzeug bereitstellt, beschrieben. Der Avatar beurteilt die Aktionen und Eingaben eines Fahrers. Daraus werden Muster erstellt. Aus diesen Mustern kann ein Benutzerprofil abgeleitet werden. Danach werden die Aktionen des Avatars eingestellt. Es wird eine biometrische Erkennung des Fahrers beschrieben, so dass dann der Avatar die Rückmeldung über den erkannten Fahrer abgibt.

In der DE 38 17 495 A1 ist ein Kraftfahrzeug mit benutzerspezifisch einstellbaren, elektronisch steuerbaren Funktionen beschrieben, wobei Einstellungen des Benutzers als sein typisches Verhalten erkannt und abgespeichert werden, und dass diese benutzerspezifischen Daten zur Einstellung verwendet werden, sobald der entsprechende Speicher an einen Prozessor angeschaltet ist. Die benutzerspezifischen Einstellungen betreffen insbesondere die Programmwahl beziehungsweise Sendereinstellung und Steuerung eines Rundfunkempfängers.

In der EP 870654 A2 wird eine Vorrichtung und ein Verfahren zur fahrerspezifischen Einstellung von Fahrzeugeinrichtungen beschrieben. Die Einstellparameter der Fahrzeugeinrichtungen sind in einem Lokalprozessor als ein Einstellparameterdatensatz gespeichert und werden über eine Stell- und/oder Regelvorrichtung als Aktionssignale an die Einrichtungsgegenstände abgegeben, von denen in die Stellund/oder Regelvorrichtung gegebenenfalls Sensorsignale rückgekoppelt sind. In der DE 196 31 414 A1 wird eine Vorrichtung zur Aufnahme des Netzhautreflexbildes und Überlagerungen von Zusatzbildern im Auge beschrieben.

### Vorteile der Erfindung

Die erfindungsgemäße Assistenzvorrichtung für ein Fahrzeug mit den Merkmalen des unabhängigen Patentanspruchs hat demgegenüber den Vorteil, daß für eine durch ein Objekterkennungssystem erkannte Person ein Benutzerprofil für diese Person geladen wird. Dieses Benutzerprofil bestimmt Einstellungen innerhalb des Fahrzeugs. Dadurch wird ein erhöhter Komfort, eine erhöhte Sicherheit und eine weitergehende Vereinfachung der Handhabung des Fahrzeugs ermöglicht.

Insbesondere ist es von Vorteil, daß die Informationen von verschiedenen Datenquellen durch Voreinstellungen, die in dem Benutzerprofil abgespeichert sind, kanalisiert werden, so daß der Fahrer vorteilhafterweise nur die Informationen erhält, die er auch wünscht.

Durch die in den abhängigen Ansprüchen aufgeführten Maßnahmen sind vorteilhafte Weiterbildungen und Verbesserungen der im unabhängigen Anspruch angegebenen Assistenzvorrichtung in einem Fahrzeug möglich.

Besonders vorteilhaft ist, daß durch eine Video- und Spracherkennung der betreffenden Person eine eindeutige Identifizierung dieser Person ermöglicht wird.

Darüber hinaus ist es von Vorteil, daß mittels vorhandener Empfangsstationen Daten von außerhalb des Fahrzeugs empfangen werden können. Dadurch werden dem Fahrer aktuelle Informationen zugeführt, so daß er bezüglich von ihm gewünschter Informationen auf dem laufenden ist.

Weiterhin ist von Vorteil, daß als Datenquellen ein Speicher, der die Benutzerprofile enthält, ein Datenserver, auf dem Informationen, wie z.B. eine Bedienungsanleitung oder Benutzerführung, abgelegt sind, und ein Navigationsgerät, mit dem der Standort und das Fahrziel leicht ermittelbar sind, vorhanden sind. Die Informationen auf diesen Datenquellen steigern den Fahrkomfort und vereinfachen die Handhabung des Fahrzeugs.

Des weiteren ist es von Vorteil, daß durch akustisch und optische Darstellungsmöglichkeiten komfortable Wiedergaben der darzustellenden Informationen ermöglicht werden.

Durch die Anzeige der darzustellenden Informationen auf einer Windschutzscheibe des Fahrzeugs ist eine bequeme und sichere Darstellung im Blickfeld des Fahrers möglich. Vorteilhafterweise wird dadurch die Fahrsicherheit entscheidend erhöht, da der Fahrer seinen Blick nicht von der Fahrbahn abwenden muß.

Weiterhin ist es von Vorteil, daß durch den Einsatz eines Bildschirms als optische Anzeige die Informationen klar erkennbar und mit einer hohen Auflösung dargestellt werden. Dabei ist auch eine dreidimensionale Darstellung möglich.

Darüber hinaus ist es von Vorteil, daß mittels eines Netzhautprojektors der Einsatz einer Projektionsfläche innerhalb des Fahrzeugs vermieden wird. Dies vereinfacht den Aufbau der Vorrichtung. Darüber hinaus ist mit einer Netzhautprojektion eine dreidimensionale Darstellung möglich, um ein möglichst realistisches Bild wiederzugeben.

Weiterhin ist es von Vorteil, daß durch eine Kombination der obengenannten Anzeigemöglichkeiten je nach Anwendung komfortable und sicherheitsfördernde Darstellungsformen ermöglicht werden.

Weiterhin ist es von Vorteil, daß durch die Verbindung der Komponenten der Assistenzvorrichtung und der mit der Assistenzvorrichtung verbundenen Komponenten mittels eines Busses eine starke Vereinfachung in der Verdrahtung der Komponenten erreicht wird und damit eine preisgünstige Lösung erzielt wird.

Darüber hinaus ist es von Vorteil, daß die erfindungsgemäße Assistenzvorrichtung durch Einstellung der Fahrer die Benutzerprofile aktualisiert und damit die Vorlieben des jeweiligen Fahrers lernt. Dies erspart einem jeweiligen Fahrer die Eingabe aller seiner Wunscheinstellungen, denn durch manuelle Einstellungen von dem Fahrer wird das Benutzerprofil für ihn erweitert. Dies vereinfacht stark den Aufbau eines Benutzerprofils, da somit nicht alle möglichen Eingaben zu Anfang vorgenommen werden müssen, um ein Benutzerprofil aufzubauen. Dies vereinfacht die Bedienung erheblich.

### Zeichnung

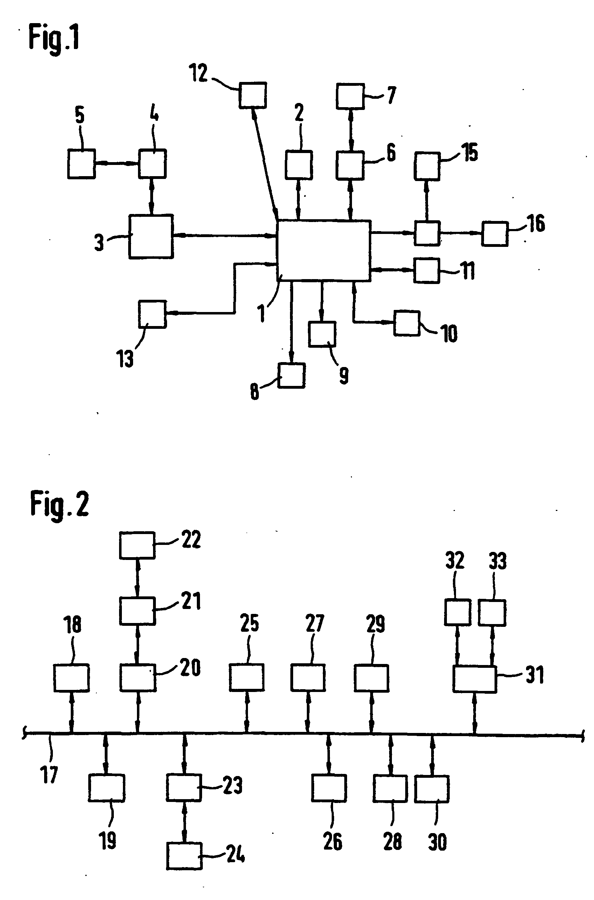

Ausführungsbeispiele der Erfindung sind in der Zeichnung dargestellt und in der nachfolgenden Beschreibung näher erläutert. Es zeigen Figur 1 eine erfindungsgemäße Assistenzvorrichtung, die mit verschiedenen Komponenten verbunden ist und Figur 2 eine erfindungsgemäße Assistenzvorrichtung, die über einen Bus mit verschiedenen Komponenten verbunden ist.

### Beschreibung der Ausführungsbeispiele

Ein Personenkraftfahrzeug weist heute viele Elemente und Komponenten auf, die abhängig von der jeweiligen Person als Fahrer eingestellt werden können. Dazu zählen der Sitz, die Kopfstütze, die Klimaanlage und vor allem die verschiedenen Datenquellen, die unter dem Begriff Infotainment zusammengefaßt werden. Darunter fallen zunächst das Autoradio als Empfangsstation, aber auch Navigationssysteme, im Fahrzeug befindliche Speichermedien und Sende-/Empfangsstationen, wie es Mobiltelefone sind.

Benutzen verschiedene Personen ein Fahrzeug, die auch meist verschiedene Vorlieben bezüglich der obengenannten Einstellungen haben, muß die jeweilige Person alle Einstellungen für sich ändern. Dies führt so weit, daß Einstellungen, z.B. am Autoradio oder am Navigationsgerät, während einer Fahrt die Fahrsicherheit beeinträchtigen können, wenn diese Person das Fahrzeug benutzt.

Erfindungsgemäß wird daher ein Benutzerprofil für eine jeweilige Person, die als Fahrer auftritt aufgebaut, um die persönlichen Einstellungen automatisch vorzunehmen.

In Figur 1 wird eine erfindungsgemäße Assistenzvorrichtung als Blockschaltbild dargestellt. Ein Rechner 1 der Assistenzvorrichtung steuert an die Assistenzvorrichtung angeschlossene und zur Assistenzvorrichtung gehörige Komponenten. Der Rechner 1 ist über einen ersten Datenein/ausgang mit einem Speicher 2 verbunden. In dem Speicher 2 befinden sich die Benutzerprofile und andere Daten, die zwischengespeichert werden.

Über einen zweiten Datenein/-ausgang ist der Rechner 1 mit einem Prozessor 3 verbunden. Der Prozessor 3 ist über einen zweiten Datenein/-ausgang mit einer Signalverarbeitung 4 verbunden. Die Signalverarbeitung 4 ist über ihren zweiten Datenein/-ausgang mit einer Kamera 5 verbunden. Der Prozessor 3, die Signalverarbeitung 4 und die Kamera 5 bilden ein Bildverarbeitungssystem.

Die Kamera 5 ist in dem Fahrzeug so positioniert, daß sie das Gesicht des jeweiligen Fahrers aufnimmt. Diese Aufnahmedaten übergibt die Kamera 5 der Signalverarbeitung 4, die diese Daten digitalisiert und als Datenstrom dem Prozessor 3 übergibt, der eine Quellencodierung vornimmt, um die Datenmenge zu reduzieren. Alternativ kann auch auf die Quellencodierung und damit auf die Datenreduktion verzichtet werden.

Der so reduzierte Datenstrom wird vom Prozessor 3 an den Rechner 1 übergeben, so daß der Rechner 1 die vom Prozessor 3 kommenden Daten mit im Speicher 2 abgespeicherten Daten vergleicht, um zu ermitteln, ob die jeweilige Person bereits als Fahrer abgespeichert wurde und, wenn ja, welche. Ist eine Person erkannt worden, wird das jeweilige Benutzerprofil aus dem Speicher 2 von dem Rechner 1 geladen, um die Einstellungen von an den Rechner 1 angeschlossenen Komponenten vorzunehmen. Eine neue Person muß sich dagegen zuerst anmelden.

Über einen dritten Datenein/-ausgang des Rechners 1 ist ein Sprachprozessor 6 angeschlossen. Über den zweiten Datenein/ausgang des Sprachprozessors 6 ist ein Mikrophon 7 mit angeschlossener Elektronik angeschlossen. Der Sprachprozessor 6 und das Mikrophon 7 bilden zusammen ein Spracherkennungssystem.

Das Mikrophon 7 wandelt akustische Wellen in elektrische Signale um, wobei die angeschlossene Elektronik diese Signale verstärkt und digitalisiert, so daß das Mikrophon 7 dem Sprachprozessor 6 einen digitalen Datenstrom übergibt. Der Sprachprozessor 6 führt eine Quellencodierung der digitalen Sprachsignale durch, um eine Datenreduktion vorzunehmen. Der Sprachprozessor 6 ist als Signalprozessor ausgeführt. Die Quellencodierung und damit die Datenreduktion kann alternativ wegfallen, so daß dann die volle Datenmenge weiter übertragen wird.

Die so reduzierten Daten werden vom Sprachprozessor 6 an den Rechner 1 übergeben. Der Rechner 1 vergleicht die vom Sprachprozessor 6 kommenden Daten mit im Speicher 2 abgelegten Sprachmustern von berechtigten Fahrern des Fahrzeugs und überprüft, ob das Sprachmuster im Speicher 2 enthalten ist und, wenn ja, zu welcher Person es gehört. Ist die betreffende Person erkannt worden, wird ein entsprechendes Benutzerprofil aus dem Speicher 2 geladen, um die Einstellungen vornehmen zu können.

Die Verwendung von zwei Personenerkennungseinrichtungen, dem Bildverarbeitungssystem und dem Spracherkennungssystem, verhilft zu einer besseren Identifikation der betreffenden Person, die insbesondere bei nahen Verwandten schwierig ist, da ein ähnliches Aussehen und ähnliche Sprachmuster gegeben sein können. Führen sowohl die Bildanalyse als auch die Sprachanalyse zu der gleichen Person, wird das entsprechende Benutzerprofil geladen. Alternativ ist es auch möglich, nur eines dieser Personenerkennungssysteme zu verwenden. Ergibt die Personenerkennung mittels des Bildverarbeitungssystems und des Spracherkennungssystems keine Übereinstimmung, wird die Person aufgefordert, akustisch und/oder optisch noch mal eine Erkennung durchzuführen.

Neue Personen müssen sich auf andere Art bei dem System, der Assistenzvorrichtung, anmelden. Dies geschieht dadurch, daß diese Personen mittels eines Schlüssels sich Zugang zum Fahrzeug verschaffen und dann sich als berechtigte Personen bei der Assistenzvorrichtung anmelden, wobei das Gesicht und/oder das Stimmuster der betreffenden Person aufgenommen wird und ein Benutzerprofil für diese Person angelegt wird. Neben einem Schlüssel, um ein Schloß des Fahrzeugs zu öffnen, sind auch eine Chipkarte (Keycard) oder ein Zugangscode möglich, um sich Zutritt zum Fahrzeug zu verschaffen, so daß eine Anmeldung, wie oben beschrieben, erfolgen kann.

Der Rechner 1 ist über einen ersten Datenausgang mit einer Klimaanlage 8 verbunden. Diese Klimaanlage 8 wird gemäß des geladenen Benutzerprofils eingestellt. Wird kein Benutzerprofil geladen, da es sich z.B. um eine noch nicht erkannte Person handelt, werden vorgegebene Grundeinstellungen verwendet.

Über einen zweiten Datenausgang ist der Rechner 1 mit einer Steuerung 9 von personenabhängig veränderbaren Bauteilen des Fahrzeugs verbunden. Zu diesen Bauteilen gehören z.B. Sitzund Kopfstützeneinstellungen. Aber auch die Lenkradeinstellung und die Rückspiegel. Auch diese Einstellungen werden gemäß des geladenen Benutzerprofils vorgenommen, ansonsten werden die letzten Einstellungen beibehalten.

Über einen vierten Datenein/-ausgang ist der Rechner 1 mit einem Datenserver 10 verbunden. Der Datenserver 10 verfügt über einen sehr großen, nichtflüchtigen Speicher, aus dem der Rechner 1 größere Datenmengen laden kann, wobei der Datenserver 10 Daten für eine Bedienungsanleitung, für eine Benutzerführung und für eine Hilfefunktion aufweist. Der Rechner 1 lädt diese Daten auf Ansprache, die mittels des Mikrofons 7 und des Sprachprozessors 6 erkannt werden und die dann entsprechend dieses Befehls von dem Rechner 1 aus dem Datenserver 10 geladen werden.

Über einen fünften Datenein/-ausgang ist der Rechner 1 mit einer Empfangsstation 11 verbunden. Diese Empfangsstation 11 ist insbesondere ein Rundfunkempfänger. Gemäß des aus dem Speicher 2 geladenen Benutzerprofils versendet der Rechner 1 an die Empfangsstation 11 entsprechende Einstellungsvorgaben, so daß im Falle des Rundfunkempfängers bestimmte Sender eingestellt werden.

Die Empfangsstation 11 als Rundfunkempfänger ist auch für den Empfang von digitalen Hörfunkprogrammen geeignet, wie es mit DAB (Digital Audio Broadcasting) oder DRM (Digital Radio Mondial) oder DVB (Digital Video Broadcasting) möglich ist, aber auch ein Rundfunkempfänger für analoge Rundfunksignale ist einsetzbar. Mittels dieser digitalen Rundfunkprogramme ist die Übertragung von Multimediadaten neben Audioprogrammen möglich. Auch gemäß dieser Multimediadaten wird eine Einstellung aus dem Benutzerprofil übernommen. Liegt kein Benutzerprofil vor oder keine Vorgaben gemäß der Einstellung für die Empfangsstation 11, werden Grundeinstellungen übernommen und als solche im Benutzerprofil abgespeichert.

Über einen sechsten Datenein/-ausgang ist der Rechner 1 mit einem Navigationsgerät 12 verbunden. Gemäß des geladenen Benutzerprofils wird das Navigationsgerät 12 aktiviert, so daß der aktuelle Standort des Fahrzeugs angezeigt wird. Durch Eingaben des Fahrers wird ein Zielort eingegeben. In dem Benutzerprofil kann aber auch angegeben sein, daß das Navigationsgerät 12 nicht verwendet wird.

Über einen siebten Datenein- und ausgang ist der Rechner 1 mit einer Sende-/Empfangsstation 13 verbunden. Die Sende-/Empfangsstation 13 ist hier ein Mobiltelefon, aber auch andere Sende-/Empfangsstationen, die mittels Funk kommunizieren, sind hier möglich. In dem geladenen Benutzerprofil können hier z.B. häufig verwendete Rufnummern für das Mobiltelefon enthalten sein, wobei auch mit dem Mobiltelefon Daten abgerufen werden können, so daß in dem Benutzerprofil vorgegeben ist, daß eine bestimmte Gegenstation angewählt wird, um bestimmte Daten sofort abzurufen. Hierzu zählen Internetseiten, die aktuelle Nachrichten, einen Wetterbericht oder insbesondere Börsenkurse enthalten.

Über einen dritten Datenausgang ist der Rechner 1 mit einer Signalverarbeitung 14 verbunden. Über einen ersten Datenausgang der Signalverarbeitung 14 ist ein Lautsprecher 15 angeschlossen. Über einen zweiten Datenausgang der Signalverarbeitung 14 ist eine optische Anzeige 16 angeschlossen.

Gemäß dem geladenen Benutzerprofil werden entweder beide oder nur eine der Darstellungsformen akustisch und/oder optisch ausgewählt. Weiterhin kann die Darstellung auf bestimmte Informationen beschränkt sein. So gibt die optische Anzeige 16, wenn sie als Projektor, der auf die Windschutzscheibe gerichtet wird, ein sog. Head-Up-Display, nur bestimmte Elemente an, z.B. den Tachometer und den Tankstand und die Kühlwassertemperatur. Die Signalverabeitung 14 setzt darzustellende Informationen in ein für den Lautsprecher 15 und/oder die Anzeige 16 geeignetes Format um. An den Lautsprecher 15 angeschlossene Elektronik wandelt die von der Signalverabeitung 14 kommenden Signale in analoge Signale um und verstärkt sie. An die Anzeige 16 angeschlossene Elektronik führt entsprechende Arbeitsschritte aus.

Die optische Anzeige 16 kann weiterhin als Netzhautprojektor ausgeführt sein. Dabei wird ein elektronisch modulierter Lichtstrahl durch die Pupille auf die Netzhaut projiziert, wobei dieser Lichtstrahl die Lichtrezeptoren der Netzhaut stimuliert, so daß ein Bild auf der Netzhaut generiert wird. Eine Bildquelle liefert dabei die darzustellenden Daten an eine Lichtquelle, die entsprechend der Bilddaten moduliert wird. Diese Lichtquelle weist drei verschiedene Farben auf, rot, grün und blau, so daß die Informationen in den richtigen Farben durch eine entsprechende Mischung des Lichts dieser drei Lichtquellen dargestellt werden können.

Dabei wird eine solch niedrige Leistung für das Licht verwendet, so daß die Netzhaut nicht geschädigt wird.

Das modulierte Licht wird durch einen Scanner über die Netzhaut gerastert. Dies muß entsprechend schnell geschehen, so daß die ganze Netzhaut aktiviert wird, wie es beim normalen Sehen auch geschieht. An den Scanner ist dann eine Optik angeschlossen, die den modulierten Lichtstrahl auf das Auge projiziert. Dieser Netzhautprojektor ist dann im Armaturenbrett befestigt, so daß der Fahrer entsprechend seiner Blickrichtung in seine Augen die Informationen projiziert bekommt.

Alternativ kann die optische Anzeige 16 auch als Bildschirm ausgeführt werden. Insbesondere autostereoskopische Bildschirme verwenden zwei Aufnahmen von einem Gegenstand um ihn darzustellen. Dabei werden diese Aufnahmen so dargestellt, daß die Augen eines Betrachters diese Aufnahmen getrennt sehen. Dies wird zum einen dadurch erreicht, daß dem Betrachter eine entsprechende Brille gegeben wird, die unterschiedliche Filter aufweist, so daß die beiden Augen unterschiedliche Dinge sehen. Darüber hinaus kann mittels einer Bildsignalverarbeitung eine Analyse der Kopfstellung des Fahrers erfolgen, so daß dann automatisch eine Zuordnung der beiden unterschiedlichen Bilder auf die Augen erfolgt.

In Figur 2 ist eine erfindungsgemäße Assistenzvorrichtung dargestellt, wobei die verschiedenen Komponenten über einen Bus 17 verbunden sind. Alle an dem Bus 17 angeschlossenen Komponenten weisen einen Baustein auf, der die Kommunikation über den Bus steuert. Solch ein Baustein ist ein geeigneter Prozessor, wie es ein Mikrokontroller ist.

Ein Rechner 18 ist über einen Datenein/-ausgang an den Bus 17 angeschlossen. Ein Speicher 19 ist über seinen Datenein/ausgang an den Bus 17 angeschlossen. Ein Prozessor 20 ist über einen Datenein/-ausgang mit dem Bus 17 verbunden. Über einen zweiten Datenein/-ausgang ist der Prozessor 20 mit einer Signalverarbeitung 21 verbunden. Die Signalverarbeitung 21 ist über ihren zweiten Datenein/ausgang mit einer Kamera 22 verbunden. Ein Sprachprozessor 23 ist über einen Datenein/-ausgang mit dem Bus 17 verbunden. Über einen zweiten Datenein/-ausgang ist der Sprachprozessor 3 mit einem Mikrofon 24 verbunden. Eine Klimaanlage 25, eine Steuerung für personenabhängig veränderbare Bauteile des Fahrzeugs 26 und ein Datenserver 27 sind jeweils über ihre Datenein/-ausgänge an den Bus 17 angeschlossen. Eine Empfangsstation 28, ein Navigationsgerät 29 und eine Sende-/Empfangsstation 30 sind jeweils über ihren Datenein/-ausgang mit dem Bus 17 verbunden. Über einen Datenein/-ausgang ist eine Signalverarbeitung 31 mit dem Bus 17 verbunden. Über einen zweiten Datenein/-ausgang ist die Signalverarbeitung 31 mit einem Lautsprecher 32 verbunden. Über einen dritten Datenein/-ausgang ist die Signalverarbeitung 31 mit einer optischen Anzeige 33 verbunden.

Die Funktionsweise ist die gleiche wie die für Figur 1 beschriebene.

Die erfindungsgemäße Assistenzvorrichtung weist die Möglichkeit auf, daß sich eine neue Person, die für sich ein Benutzerprofil anlegen möchte, sich bei der Assistenzvorrichtung anmeldet, so daß für sie ein Datensatz angelegt wird, wie es oben beschrieben wurde.

Ein einmal angelegtes Benutzerprofil enthält zunächst Grundeinstellungen, die durch Eingaben des Benutzers überschrieben werden. Es kann vorgesehen sein, daß diese Eingaben des Benutzers nur nach Bestätigung durch den Benutzer in das Benutzerprofil übernommen werden.

Weitere Komponenten und auch weniger Komponenten können mit dem Rechner verbunden sein, um gemäß einem Benutzerprofil gesteuert zu werden.

## Patentansprüche

1. Assistenzvorrichtung für ein Fahrzeug, wobei die Assistenzvorrichtung einen Rechner (1, 18) aufweist, wobei der Rechner (1, 18) mit Mitteln (3-7,20-24) zur Personenerkennung, mit Datenquellen (2, 10, 12, 19, 27, 29), mit Mitteln (15, 16, 32, 33) zur Darstellung und mit Mitteln (11, 13, 28, 30) zum Datenempfang verbunden ist, wobei der Rechner (1, 18) mit einer Klimaanlage (8, 25) und mit einer Steuerung (9, 26) für personenabhängig veränderbare Bauteile des Fahrzeugs verbunden ist, wobei der Rechner (1, 18) in Abhängigkeit von einer mit den Mitteln (3-7, 20-24) zur Personenerkennung erkannten Person ein für die erkannte Person gültiges Benutzerprofil aus einem Speicher (2, 19) lädt, um dem Benutzerprofil entsprechende Daten aus den Datenquellen zu laden und um die Mittel (11, 13, 28, 30) zum Datenempfang, die Mittel (15, 16, 32, 33) zur Darstellung, die Klimaanlage (8, 27) und die Steuerung (9, 26) für personenabhängige Bauteile des Fahrzeugs dem Benutzerprofil entsprechend einzustellen, **dadurch gekennzeichnet, dass** die Mittel (11, 13, 28, 30) zum Datenempfang eine Empfangsstation zum Empfang von digitalen Hörfunkprogrammen aufweisen, wobei mittels der digitalen Hörfunkprogramme Multimediadaten empfangen werden und gemäß dieser Multimediadaten eine Einstellung aus dem Benutzerprofil übernommen wird.

2. Assistenzvorrichtung nach Anspruch 1, **dadurch gekennzeichnet, dass** die Mittel (3-7, 20-24) zur Personenerkennung eine Kamera (5, 22), eine Signalverarbeitung (4, 21) und einen Prozessor (3, 20) aufweisen, um eine Videoerkennung einer Person durchzuführen und/oder dass die Mittel (3-7, 20-24) zur Personenerkennung ein Mikrofon (7, 24) und einen Sprachprozessor (6, 23) aufweisen, um eine Stimmmustererkennung durchzuführen.

3. Assistenzvorrichtung nach Anspruch 2, **dadurch gekennzeichnet, dass** die Datenquellen (2, 10, 12, 19, 27, 29) einen Speicher (2,19) und/oder einen Datenserver (10, 27) und/oder ein Navigationsgerät (12, 29) aufweisen.

4. Assistenzvorrichtung nach Anspruch 3, **dadurch gekennzeichnet, dass** die Mittel (15, 16, 32, 33) zur Darstellung einen Lautsprecher (15, 32) und eine Anzeige (16, 33) aufweisen.

5. Assistenzvorrichtung nach Anspruch 4, **dadurch gekennzeichnet, dass** die Anzeige (16, 33) einen Projektor für eine Windschutzscheibe des Fahrzeugs aufweist.

6. Assistenzvorrichtung nach Anspruch 4, **dadurch gekennzeichnet, dass** die Anzeige (16, 33) einen Bildschirm aufweist.

7. Assistenzvorrichtung nach Anspruch 4, **dadurch gekennzeichnet, dass** die Anzeige (16, 33) einen Projektor aufweist, der Informationen direkt auf die Netzhaut des Fahrers abbildet.

8. Assistenzvorrichtung nach den Ansprüchen S, 6 und 7, **dadurch gekennzeichnet, dass** die Anzeige (16, 33) eine Kombination des Projektors für die Windschutzscheibe, des Bildschirms und des Projektors, der Informationen auf die Netzhaut des Fahrers abbildet, aufweist.

9. Assistenzvorrichtung nach einem der vorhergehenden Ansprüche, **dadurch gekennzeichnet, dass** der Rechner (1, 18) mit anderen Komponenten der Vorrichtung und mit, mit der Vorrichtung verbundenen, Komponenten über einen Bus (17) verbunden ist.

10. Assistenzvorrichtung nach einem der vorhergehenden Ansprüche, **dadurch gekennzeichnet, dass** der Rechner (1, 18) das Benutzerprofil entsprechend neuen Einstellungen einer jeweiligen Person verändert.

## Revendications

1. Dispositif d'assistance pour un véhicule comportant un calculateur (1, 18),
le calculateur (1, 18) ayant des moyens (3-7, 20-24) pour reconnaître une personne, des sources de données (2, 10, 12, 19, 27, 29), des moyens (15, 16, 32, 33) pour représenter des informations et des moyens (11, 13, 28, 30) pour la réception de données,
le calculateur (1, 18) étant relié à une installation de climatisation (8, 25) et une commande (9, 26) pour les composants du véhicule modifiés en fonction de la personne,
le calculateur (1, 18) utilisé en fonction d'une personne reconnue par les moyens de reconnaissance de personnes (3-7, 20-24), un profil d'utilisateur valable pour la personne reconnue pour extraire ce profil d'une mémoire (2, 19) et charger les données correspondant à ce profil d'utilisateur de la source de données et régler les moyens (15, 16, 32, 33) de représentation, l'installation de climatisation (8, 27) et la commande (9, 26) des éléments du véhicule dépendant de la personne en fonction du profil de l'utilisateur,
**caractérisé en ce que**
les moyens (11, 13, 28, 30) de réception de données comportent un poste de réception pour recevoir les programmes Audio numériques, ces programmes Audio numériques permettant de recevoir des données multimédias et d'effectuer le réglage selon le profil d'utilisateur à partir de ces données multimédias.

2. Dispositif d'assistance selon la revendication 1,
**caractérisé en ce que**
les moyens (3-7, 20,24) de reconnaissance de personnes comprennent une caméra (5, 22), un moyen de traitement de signal (4, 21) et un processeur (3, 30) pour effectuer une reconnaissance vidéo de la personne et/ou les moyens (3-7, 20-24) de reconnaissance de personnes comportent un micro (7, 24) et un processeur vocal (6, 23) pour effectuer une reconnaissance vocale.

3. Dispositif d'assistance selon la revendication 2,
**caractérisé en ce que**
les sources de données (2, 10, 12, 19, 27, 29) comprennent une mémoire (2, 19) et/ou un serveur de données (10, 27) et/ou un appareil de navigation (12, 29).

4. Dispositif d'assistance selon la revendication 3,
**caractérisé en ce que**
les moyens (15, 16, 32, 33) de représentation comportent un haut-parleur (15, 32) et un afficheur (16, 33).

5. Dispositif d'assistance selon la revendication 4,
**caractérisé en ce que**
l'afficheur (16, 33) comporte un projecteur pour le pare-brise du véhicule.

6. Dispositif d'assistance selon la revendication 4,
**caractérisé en ce que**
l'afficheur (16, 33) est un écran.

7. Dispositif d'assistance selon la revendication 4,
**caractérisé en ce que**
l'afficheur (16, 33) comporte un projecteur qui forme les informations directement sur le fond de l'oeil du conducteur.

8. Dispositif d'assistance selon l'une quelconque des revendications 5, 6, 7,
**caractérisé en ce que**
l'afficheur (16, 33) comporte une combinaison du projecteur de pare-brise, de l'écran et du projecteur qui projette des informations sur le fond de l'oeil du conducteur.

9. Dispositif d'assistance selon l'une quelconque des revendications précédentes,
**caractérisé en ce que**
le calculateur (1, 18) est relié à d'autres composants du dispositif ainsi qu'aux composants du dispositif par l'intermédiaire d'un bus 17.

10. Dispositif d'assistance selon l'une quelconque des revendications précédentes,
**caractérisé en ce que**
le calculateur (1, 18) modifie le profil d'utilisateur suivant les nouveaux réglages de chaque personne.

## Claims

1. Assistance device for a vehicle, the assistance device having a computer (1, 18), the computer (1, 18) being connected to means (3-7, 20-24) for recognizing persons, to data sources (2, 10, 12, 19, 27, 29), to reproduction and display means (15, 16, 32, 33) and to means (11, 13, 28, 30) for receiving data, the computer (1, 18) being connected to an air-conditioning system (8, 25) and to a controller (9, 26) for components of the vehicle which can be varied as a function of persons, the computer (1, 18) loading, as a function of a person recognized using the means (3-7, 20-24) for recognizing persons, a user profile - valid for the recognized person - from a memory (2, 19) in order to load data corresponding to the user profile from the data sources and in order to set the means (11, 13, 28, 30) for data reception, the reproduction and display means (15, 16, 32, 33), the air-conditioning system (8, 27) and the controller (9, 26) for person-dependent components of the vehicle in accordance with the user profile, **characterized in that** the means (11, 13, 28, 30) for receiving data have a reception station for receiving digital radio stations, multimedia data being received by means of the digital radio stations and a setting being transferred from the user profile in accordance with this multimedia data.

2. Assistance device according to Claim 1, **characterized in that** the means (3-7, 20-24) for recognizing persons have a camera (5, 22), a signal processing means (4, 21) and a processor (3, 20) in order to carry out video recognition of a person, and/or **in that** the means (3-7, 20-24) for recognizing persons have a microphone (7, 24) and a speech processor (6, 23) in order to carry out voice pattern recognition.

3. Assistance device according to Claim 2, **characterized in that** the data sources (2, 10, 12, 19, 27, 29) have a memory (2, 19) and/or a data server (10, 27) and/or a navigation device (12, 29).

4. Assistance device according to Claim 3, **characterized in that** the reproduction and display means (15, 16 , 32 , 33) have a loudspeaker (15, 32) and a display (16, 33).

5. Assistance device according to Claim 4, **characterized in that** the display (16, 33) has a projector for a windscreen of the vehicle.

6. Assistance device according to Claim 4, **characterized in that** the display (16, 33) has a screen.

7. Assistance device according to Claim 4, **characterized in that** the display (16, 33) has a projector which projects information directly onto the driver's retina.

8. Assistance device according to Claims 5, 6 and 7, **characterized in that** the display (16, 33) has a combination of the projector for the windscreen, the screen and the projector which projects information onto the driver's retina.

9. Assistance device according to one of the preceding claims, **characterized in that** the computer (1, 18) is connected to other components of the device and via a bus (17) to components which are connected to the device.

10. Assistance device according to one of the preceding claims, **characterized in that** the computer (1, 18) changes the user profile in accordance with new settings of a respective person.
